# EUROPÄISCHE PATENTANMELDUNG

(11) **EP 4 649 795 A1**
(43) Veröffentlichungstag der Anmeldung: **19.11.2025**
(21) Anmeldenummer: 25175990.8
(22) Anmeldetag: 13.05.2025
(51) Int. Cl.: A01B 33/02

(54) **LANDWIRTSCHAFTLICHE ARBEITSMASCHINE**

(30) Priorität: 14.05.2024 DE 202024102481 U
(71) Anmelder: Grimme Landmaschinenfabrik GmbH & Co. KG, 49401 Damme (DE)
(72) Erfinder: Lange gen. Detert, Ansgar, 49324 Melle (DE); Böging, Michael, 49424 Goldenstedt/Lutten (DE); Dernjac, Kai, 49377 Vechta (DE); Dreishing, Michael, 49434 Neuenkirchen-Vörden (DE)
(74) Vertreter: Wischmeyer, André

(57) **Zusammenfassung**

Die Erfindung betrifft eine landwirtschaftliche Arbeitsmaschine, insbesondere in Form einer vorzugsweise als Bodenfräse ausgebildeten Bodenbearbeitungsmaschine, umfassend eine mit wenigstens einem Werkzeug versehene Welle, deren Drehachse sich im Betrieb angewinkelt zur Fahrtrichtung und zumindest im Wesentlichen parallel zum Untergrund erstreckt, und umfassend ein an einem Rahmen der Arbeitsmaschine angeordnetes Gehäuse, welches zumindest abschnittsweise oberhalb der Welle angeordnet ist und eine einen Kanal zwischen Welle und Gehäuse begrenzende Innenwand aufweist, wobei das Gehäuse bezüglich der Fahrtrichtung einen vorderen und einen hinteren, beweglichen Gehäuseteil mit jeweiligen Innenwandteilen aufweist, die sich jeweils entlang der Welle erstrecken und die jeweils zumindest zwei einstellbare, unterschiedliche Betriebspositionen aufweisen, in denen die jeweiligen Innenwandteile der Gehäuseteile unterschiedlich zur Welle positioniert sind.

## Beschreibung

Die vorliegende Erfindung betrifft einen Gegenstand nach dem Oberbegriff des Anspruchs 1.

Bei landwirtschaftlichen Arbeitsmaschinen, insbesondere bei Bodenbearbeitungsmaschinen, aus dem Stand der Technik gibt es eine Reihe von Möglichkeiten, die Erdbearbeitung und insbesondere die Aufarbeitung der Erde bzw. des Bodens, insbesondere im Kartoffelanbau, zu kontrollieren. Einerseits wird versucht, die Erdanhaftung im Rotorgehäuse beispielsweise durch federnd aufgehängte Gehäuse zu reduzieren. Andererseits wird über unterschiedliche Werkzeuge auf einer rotierenden Welle bzw. einer Rotorwelle, beispielsweise in Form von unterschiedlichen Zinkengeometrien oder durch Drehzahlveränderungen versucht, die Krümelungsgröße der zu bearbeitenden Erde bzw. des zu bearbeitenden Bodens zu steuern. Es hat sich allerdings herausgestellt, dass einerseits die federnde Aufhängung des Gehäuses nicht zu einer hinreichenden Verminderung der Erdanhaftung führt. Der Austausch von Werkzeugen in Form von Zinken oder auch einzelner Rotorwellen ist andererseits aufwendig. Darüber hinaus sind Drehzahländerungen am Getriebe nur in stark begrenzten Übersetzungen verfügbar.

Aus der EP 1 673 968 A1 ist ein Gegenstand nach dem Oberbegriff des Anspruchs 1 und des Weiteren bekannt, eine Innenwand aus einem elastomeren Material und mit einem frei schwingenden Ende zu versehen, um die Anhaftung von Erde zu reduzieren.

Es ist Aufgabe der vorliegenden Erfindung, die Erdbearbeitung und insbesondere die Erdaufbereitung bei einer Bodenbearbeitungsmaschine zu verbessern.

Die Aufgabe wird gelöst durch einen Gegenstand gemäß Anspruch 1. Vorteilhafte Ausgestaltungen der Erfindung sind den auf den Anspruch 1 rückbezogenen Unteransprüchen sowie der nachfolgenden Beschreibung zu entnehmen.

Eine erfindungsgemäße landwirtschaftliche Arbeitsmaschine, insbesondere in Form einer vorzugsweise als Bodenfräse ausgebildeten Bodenbearbeitungsmaschine, zeichnet sich dadurch aus, dass das Gehäuse bezüglich der im Betrieb vorhandenen Fahrtrichtung einen vorderen und einen hinteren beweglichen Gehäuseteil mit jeweiligen Innenwandteilen aufweist, die sich jeweils entlang der Welle erstrecken und die jeweils zumindest zwei einstellbare, unterschiedliche Betriebspositionen aufweisen, in denen die jeweiligen Innenwandteile der Gehäuseteile unterschiedlich zur Welle bzw. deren Drehachse positioniert, insbesondere unterschiedlich beabstandet sind. Die Erfindung beruht insbesondere auf der Erkenntnis, dass durch die unterschiedliche Positionierung eines in Umfangsrichtung zumindest zweigeteilten Gehäuses zur Welle der durch den Kanal geförderte und im Kanal bearbeitete Boden gezielt bearbeitet und daher beeinflusst wird. Durch die Einstellung gewünschter Gehäusepositionen sowie die Verwendung zweier Gehäuseteile, nämlich eines vorderen und eines hinteren Gehäuseteils, mit jeweiligen Innenwandteilen können gezielt Einstellungen, insbesondere Positions- und/oder Formänderungen, des Gehäuses vorgenommen und damit auch der Erdaufbau gezielt verhindert werden. Das Gehäuse dient somit nicht nur einfach als Einhausung für die Welle, sondern mit seinen unterschiedlichen Betriebspositionen auch als Stellgröße für die Bearbeitung des Bodens.

Für die Einstellung der jeweiligen Betriebsposition weist die Arbeitsmaschine eine Stellvorrichtung auf, über die die Gehäuseteile relativ zum Rahmen der Arbeitsmaschine oder zu einem Gehäusefestrahmen in den unterschiedlichen Betriebspositionen festlegbar ist.

Die Innenwandteile bilden gemeinsam und insbesondere vollständig die Innenwand des Gehäuses aus. Eine Innenwand im Sinne der Erfindung ist eine Wand, die den Kanal nach innen hin, d.h. vom Gehäuse in Richtung der Welle oder Drehachse begrenzt. Bei einschaligen Gehäusen ist die Innenwand gleichzeitig auch eine Außenwand.

Erfindungsgemäß ist für den Betrieb der Arbeitsmaschine die Möglichkeit gegeben, den anfänglich in den Kanal überführten Boden während seines Wegs durch den Kanal in Umfangsrichtung teilweise um die Drehachse herum, durch die vorderen und hinteren Gehäuseteile gezielt unterschiedlich zu beeinflussen, wobei dies unabhängig davon ist, in welche Richtung sich die Welle dreht. Deren Drehachse befindet sich im Betrieb angewinkelt zur Fahrtrichtung dergestalt, dass sich in einer Draufsicht auf die Arbeitsmaschine die Fahrtrichtung und die Drehachse schneiden. Insbesondere verläuft die Drehachse in einem 90°-Winkel zur Fahrtrichtung. Darüber hinaus verläuft die Drehachse zumindest im Wesentlichen parallel zum Untergrund dergestalt, dass sie einen Winkel von +/- 20° zum horizontal verlaufenden Boden einnimmt. Insbesondere verläuft sie parallel zum Untergrund. Darüber hinaus ist das Gehäuse abschnittsweise dergestalt oberhalb der Welle angeordnet, dass in Drehachsenrichtung betrachtet das Gehäuse zumindest in einem Winkel von +/- 30° zur Lotrechten durch die Drehachse bzw. zur Senkrechten zum Untergrund den Kanal begrenzt. Insbesondere gilt dies für einen Winkel von +/- 45° sowie noch bevorzugter von zumindest einen Winkelbereich von +/- 65° zur Lotrechten. Ergänzend kann der vom Gehäuse abgedeckte Winkelbereich vorzugsweise weniger als 180° betragen.

Als Fahrtrichtung der Arbeitsmaschine wird auf eine Geradeausfahrt abgestellt. Der Kanal ist der zwischen der Welle und dem Gehäuse ausgebildete Bereich, wobei während des Betriebs den Kanal durchstreifende Werkzeuge der Welle nicht berücksichtigt werden.

Zur verbesserten Einstellung der Gehäuseteile sind diese um zumindest eine und insbesondere um jeweils eine angewinkelt zur Fahrtrichtung verlaufende und insbesondere parallel zur Drehachse der Welle verlaufende Schwenkachse relativ zu dem Rahmen verschwenkbar. Insbesondere zu Wartungszwecken kann der hintere Gehäuseteil vorzugsweise um zumindest 60°, weiter vorzugsweise um zumindest 90° hoch verschwenkt werden.

Vorteilhafterweise sind die jeweiligen Schwenklager an den zueinander hin gewandten Enden der Gehäuseteile ausgebildet, so dass eine Vorderkante des vorderen Gehäuseteils sowie eine Hinterkante des hinteren Gehäuseteils nach oben verschwenken kann. Durch eine solche Verschwenkung kann eine Welle mit größerem Durchmesser bzw. längeren Werkzeugen verwendet werden, insbesondere dann, wenn die Welle zusätzlich über eine Wellenstellvorrichtung gegenüber dem Rahmen und dem Gehäuse abgesenkt werden kann. Insbesondere ist das zumindest eine, dann gemeinsame Schwenklager der beiden Gehäuseteile genau oberhalb der Welle angeordnet,

Entsprechend kann einerseits eine Anpassung der Höhe des Ein- bzw. Auslaufkanals für zu bearbeitenden Boden erfolgen. Andererseits ermöglicht dies die bessere Zugänglichkeit zur Wartung der Welle sowohl von vorne als auch von hinten.

Insbesondere sind jeweilige Schwenklager genau oberhalb der Welle angeordnet, so dass sich ein symmetrischer und insbesondere gleicher Aufbau der vorderen und hinteren Gehäuseteile ergeben kann. Sofern zusätzlich die vorderen und hinteren Gehäuseteile bezüglich der Innenwandteile gleich ausgebildet sind, kann sich ein identischer Aufbau von vorderem und hinteren Gehäuseteil ergeben, was Vorteile für Fertigung und Wartung mit sich bringt.

Vorteilhafterweise sind die Schwenkachsen oberhalb der den Kanal begrenzenden Innenwandteile ausgebildet, so dass die Schwenklager von dem zu bearbeitenden Boden geschützt sind. Insbesondere liegen die entsprechenden Kanten der zueinander hingerichteten Ränder von vorderem und hinterem Gehäuseteil dicht an- bzw. beieinander, um einen möglichst geringen, in Richtung der Drehachse verlaufenden Spalt freizulassen.

Zur Versteifung zumindest eines der Gehäuseteile ist wenigstens ein Quer- und/oder wenigstens ein Längsträger vorgesehen. Solche Träger eignen sich darüber hinaus auch zur Anordnung etwaiger funktionaler Teile, insbesondere zur Anbindung an einem.

Die Längs- und/oder die Querträger können gemäß einer Weiterbildung der Erfindung ein oder mehrere Schwenklager mit ausbilden, über die die Schwenkachse des jeweiligen Gehäuseteils definiert wird. Vorzugsweise sind in Fahrtrichtung betrachtet über die Breite des Gehäuses mehrere Längsträger vorgesehen, an denen eine Mehrzahl von insbesondere parallel zur Drehachse verlaufenden Querträgern befestigt ist.

Gemäß einer Weiterbildung der Erfindung sind die Innenwandteile der Gehäuseteile aus einem elastomeren Material zumindest mit ausgebildet. Durch die aufgrund des elastomeren Materials vorhandene elastische Bewegbarkeit der Innenwandteile, insbesondere bei Shorehärten A zwischen 75 und 95, haftet weniger Erde an und die Aufbereitung des Bodens kann wegen der verringerten Störeinflüsse durch anhaftende Erde definierter erfolgen.

Gemäß einer Weiterbildung der Erfindung sind Längs- und Querträger eines jeweiligen Gehäuseteils einen Gehäuseteilerahmen ausbildend aneinander befestigt, insbesondere wobei zumindest einer der Längsträger relativbeweglich zu zumindest einem der Querträger und/oder zumindest ein Innenwandteil relativbeweglich zu dem Gehäuseteilerahmen angeordnet ist. Beispielsweise kann ein Querträger in Längslöchern mehrerer Längsträger angeordnet sein. Durch die Relativbeweglichkeit ist der Gehäuseteilerahmen, durch den die Innenwandteile getragen werden, verformbar, wozu geeignete Stellmittel verwendbar sein können. Mit den unterschiedlichen Rahmenformen ergeben sich unterschiedliche Formen der Innenwand und somit Einstellmöglichkeiten für die Erdaufbereitung.

Ein Gehäuseteil umfasst somit insbesondere einen gegebenenfalls auch mehrteiligen Innenwandteil sowie einen Gehäuseteilerahmen, an dem der oder Innenwandteile angeordnet sind. Der Gehäuseteilerahmen kann in einem Gehäusefestrahmen oder dem Rahmen der Arbeitsmaschine beweglich gelagert sein.

Insbesondere können mehrere Längsträger miteinander gekoppelt und dergestalt zwangsgeführt sein, dass sich bei Bewegung des Gehäuserahmens aus einer ersten in eine zweite Betriebsstellung eine unterschiedliche Form des Gehäuseteils ergibt.

Gemäß einer Weiterbildung der Erfindung können ebenfalls die elastischen Innenwandteile über Langlöcher an zumindest einem der Träger aufgehängt sein und zwecks Formänderung relativbeweglich zu diesen sein.

Vorzugsweise weist zumindest einer der Gehäuseteile in zumindest zwei Betriebszuständen unterschiedliche Krümmungsradien auf. Durch die Überführung der Gehäuseteile von dem einen in den anderen Betriebszustand werden somit unterschiedliche Szenarien für die Bodenbearbeitung realisiert, da sich die Charakteristik des sich um die Welle herum erstreckenden Kanals ändert. Der Krümmungsradius entspricht hierbei dem Radius, der betrachtet in Richtung der Drehachse und von dieser hin zur inneren Oberfläche der Innenwand ausgebildet ist. Der Krümmungsradius muss kein konstanter Radius für den Verlauf der Innenwand um die Drehachse herum sein. Vielmehr kann es sich um einen variierenden Radius handeln, so dass in den zumindest zwei Betriebszuständen die Abstände identischer Bereiche oder Punkte der Gehäusewand zur Drehachse unterschiedlich sind.

Vorzugsweise verschwenkt die vordere Kante um zumindest 5°, insbesondere um zumindest 25° um die Schwenkachse. Die hintere Kante kann vorteilhafterweise um zumindest 5°, insbesondere um zumindest 30° und vorzugsweise um zumindest 45° für eine verbesserte Wartung neben einer angepassten Bodenbearbeitung verschwenken. Insbesondere verschwenkt die hintere Kante zur Herstellung eines Wartungszugangs um zumindest 90°.

Vorteilhafterweise ist zur weiterhin verbesserten Einstellbarkeit dem vorderen Gehäuseteil wenigstens ein vorderes Stellmittel zugeordnet, über das die Vorderkante des vorderen Gehäuseteils in der Höhe und/oder entlang der Fahrtrichtung verstellbar ist.

Vorzugsweise ist dem hinteren Gehäuseteil wenigstens ein hinteres Stellmittel zugeordnet, über das die hintere Kante des hinteren Gehäuseteils in der Höhe und/oder entlang der Fahrtrichtung verstellbar ist.

Es versteht sich, dass die Höhe hierbei die Höhe über einer Aufstandsfläche bzw. einem horizontal verlaufenden Untergrund der Vorrichtung ist. Insbesondere in Kombination mit einem in sich relativbeweglichen Rahmen führt die Verwendung solcher Stellmittel zu einfachen Formänderungen des Gehäuses und mithin zu einer Beeinflussung der Erdaufbereitung.

Die Stellmittel sind aufgrund verbesserter Krafteinleitung vorteilhafterweise an der Vorder- bzw. hinteren Kante des jeweiligen Gehäuseteils angeordnet, können jedoch beispielsweise auch in Drehachsenrichtung betrachtet in einem mittleren Bereich eines jeweiligen Gehäuseteils angeordnet sind.

Die Steuerung der erfindungsgemäßen Arbeitsmaschine zur weiterhin verbesserten Bearbeitung des Bodens ist insbesondere zusätzlich verbessert, wenn die Welle über eine Wellenstellvorrichtung in der Höhe verstellbar am Rahmen der Arbeitsmaschine angeordnet ist. In einer einfachen Variante kann es sich um Ausnehmungen des Rahmens handeln, die in der Höhe übereinander angeordnet sind und über die eine unterschiedlich hohe Befestigung des jeweiligen endseitigen Lagers der Welle erfolgen kann.

Gemäß einer Weiterbildung der Erfindung ist zumindest ein Vibrationserzeuger vorgesehen, der mit zumindest einem der Gehäuseteile zur Erzeugung einer Vibration desselben verbunden ist. Dieser Vibrationserzeuger kann in den Gehäuseteil integriert oder an diesem Gehäuseteil angeordnet sein. Durch die von dem Vibrationserzeuger erzeugte Vibration kann der Kanal verbessert von Erde freigehalten werden, was definiertere Rahmenbedingungen für die Erdaufbereitung ermöglicht. Insbesondere über die Breite des Gehäuses können auch mehrere Vibrationserzeuger vorhanden sein.

Bei einer Segmentierung des Gehäuses mit parallel zur Fahrtrichtung betrachtet mehreren nebeneinander angeordneten Segmenten, die einen Teil der Innenwand ausbilden, kann der zumindest eine Vibrationserzeuger einem Segment zugeordnet sein. Bei mehreren Vibrationserzeugern können entsprechend mehrere Segmente mit einem oder mehreren Vibrationserzeugern ausgestattet sein. Insbesondere werden die Segmente oder Gehäuseteile bezogen auf eine Längsposition in Fahrtrichtung und/oder eine Breitenposition quer dazu dort mit einem Vibrationserzeuger auf der von dem Kanal abgewandten Seite des Gehäuse versehen, wo während des Betriebs auf der zum Kanal hin gewandten Seite typischerweise vermehrt Erde anhaftet.

Insbesondere ist ein Anregungssignal für den Vibrationserzeuger geschwindigkeitsabhängig, beispielsweise von der Fahrtgeschwindigkeit, wozu eine entsprechende Steuervorrichtung ein Geschwindigkeitssignal der Arbeitsmaschine aufnehmen und verarbeiten kann. Diese Steuervorrichtung kann in eine Steuereinheit der Arbeitsmaschine integriert sein. Ergänzend kann das Anregungssignal abhängig von der Drehzahl der Welle und/oder den Bodenverhältnissen, beispielsweise der Bodenfeuchte ausgebildet sein, wozu ein Feuchtesensor vorgesehen sein kann.

Vorteilhafterweise ist wenigstens ein Vibrationserzeuger quer zur Fahrtrichtung betrachtet und bezüglich der Fahrtrichtung zwischen einem vorderen und einem hinteren Ende eines der jeweiligen Gehäuseteile angeordnet. Insofern wirkt er auf die zwischen den vorderen und hinteren Kanten ausgebildete Fläche des Gehäuseteils und kann diese insbesondere weitgehend unbeeinflusst von etwaigen Befestigungspunkten des Gehäuseteils in Schwingung versetzen. Alternativ oder ergänzend kann der Vibrationserzeuger auch unmittelbar auf einen etwaigen Rahmen des jeweiligen Gehäuseteils einwirken und somit die große Teile der Innenwand bzw. die gesamte Innenwand anregen. Vorzugsweise ist die Innenwand der Gehäuseteile hierfür aus einem elastomeren Material zumindest mit ausgebildet. Auch ohne einen Vibrationserzeuger führt die Ausbildung der Innenwand des Gehäuseteils aus einem elastomeren Material zu einer Schwingungsfähigkeit desselben, was die Anhaftung von Erdmaterial minimiert.

Der Vibrationserzeuger kann alternativ oder ergänzend (dann als weiterer Vibrationserzeuger) quer zur Fahrtrichtung betrachtet an einem bezüglich der Fahrtrichtung vorderen oder hinteren Ende eines der Gehäuseteile angeordnet sein, so dass beispielsweise durch ein Auf- und Abbewegen der Vorderkante einerseits über ein etwaig elastomeres Material und andererseits über eine hiermit einhergehende Verschwenkung um die Schwenkachse bzw. in dem Schwenklager eine Bewegung auf das Gehäuseteil eingebracht wird.

Vorzugsweise umfasst der Vibrationserzeuger ein Vibrationsmittel, das an dem Gehäuseteil anliegt oder mit diesem verbunden ist und wobei das Vibrationsmittel zur Ausübung einer Kraft auf den Gehäuseteil insbesondere in Richtung quer zur flächigen Erstreckung des Gehäuseteils ausgebildet ist. Die Einleitung der Kraft erfolgt somit quer zur flächigen Erstreckung, so dass eine Vibration mit einer ausreichend großen Komponente in Richtung der Drehachse der Welle erzeugt ist, was den Aufbau von Erde an der Innenwand des Gehäuseteils in Richtung der Drehachse der Welle wirkungsvoll vermindert.

Beispielsweise handelt es sich bei einer mechanisch einfach ausgebildeten Variante des Vibrationsmittels um ein insbesondere in Form einer Drehscheibe ausgebildetes sowie vorzugsweise exzentrisch gelagertes Vibrationsmittel, welches rotierend antreibbar ist. Hierdurch kann durch eine einfache Änderung der Drehzahl die Frequenz der Vibration geändert werden. Vorzugsweise weist die Drehscheibe alternativ oder ergänzend zu einer exzentrischen Lagerung unterschiedliche Randabstände zur Drehachse ihres Antriebs auf.

Das Vibrationsmittel kann insbesondere ergänzend oder alternativ längsbeweglich in Richtung quer zur flächigen Erstreckung des Gehäuseteils ausgebildet sein und beispielsweise als Stab mit seiner Stirnseite an dem Gehäuseteil angeordnet sein und dieses in Schwingung versetzen.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand in einer isometrischen Ansicht,
- Fig. 2: einen Teil des Gegenstands nach Fig. 1,
- Fig. 3: eine Detailansicht eines Gehäuseteils eines erfindungsgemäßen Gegenstands,
- Fig. 4: eine weitere Detailansicht eines erfindungsgemäßen Gegenstands,
- Fig. 5: den Gegenstand nach Fig. 2 in einer teilweise aufgebrochenen Ansicht,
- Fig. 6: den Gegenstand nach Fig. 2 in zwei verschiedenen Betriebsstellungen,
- Fig. 7: eine weitere Teilansicht des Gegenstands nach Fig. 1,
- Fig. 8: eine weitere Ausbildung eines erfindungsgemäßen Gegenstands in einer Ansicht gemäß Fig. 7,
- Fig. 9: eine Prinzipdarstellung eines weiteren erfindungsgemäßen Gegenstands,
- Fig. 10: eine Prinzipdarstellung eines weiteren erfindungsgemäßen Gegenstands.

Einzelne technische Merkmale der nachbeschriebenen Ausführungsbeispiele können auch in Kombination mit vorbeschriebenen Ausführungsbeispielen sowie den Merkmalen des unabhängigen Anspruchs und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

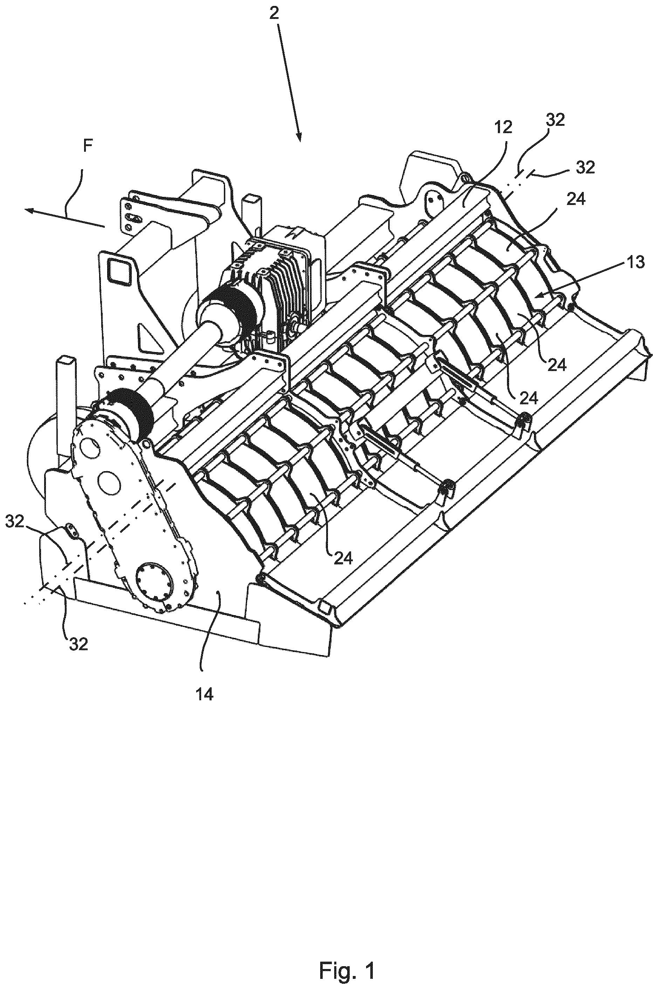

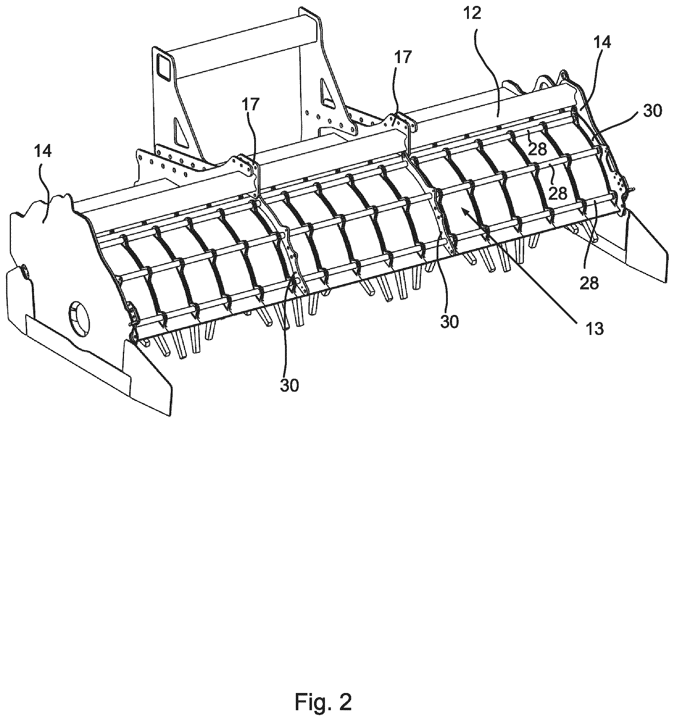

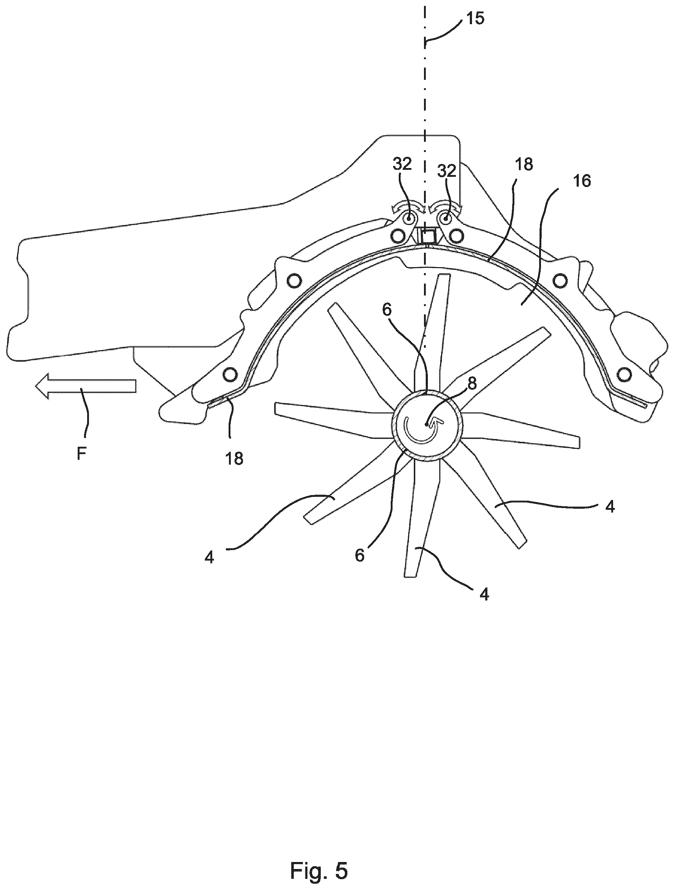

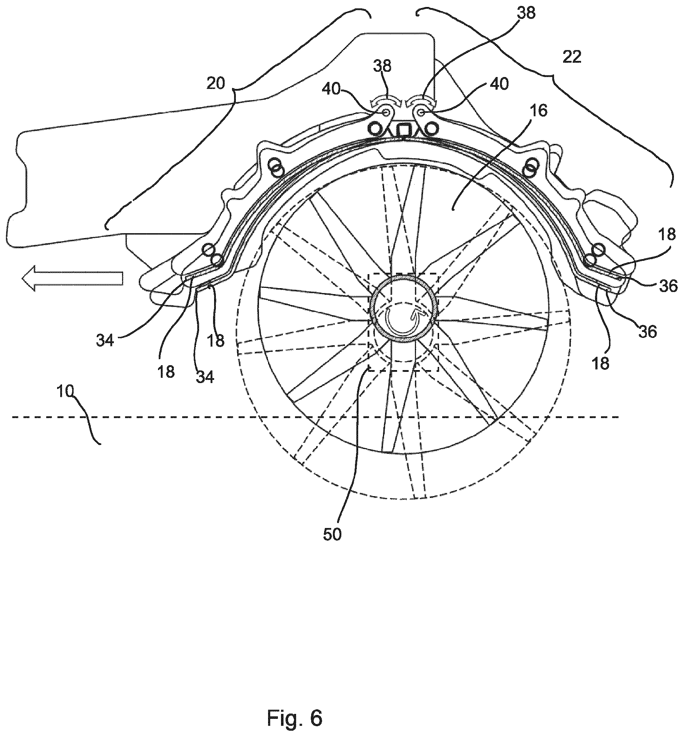

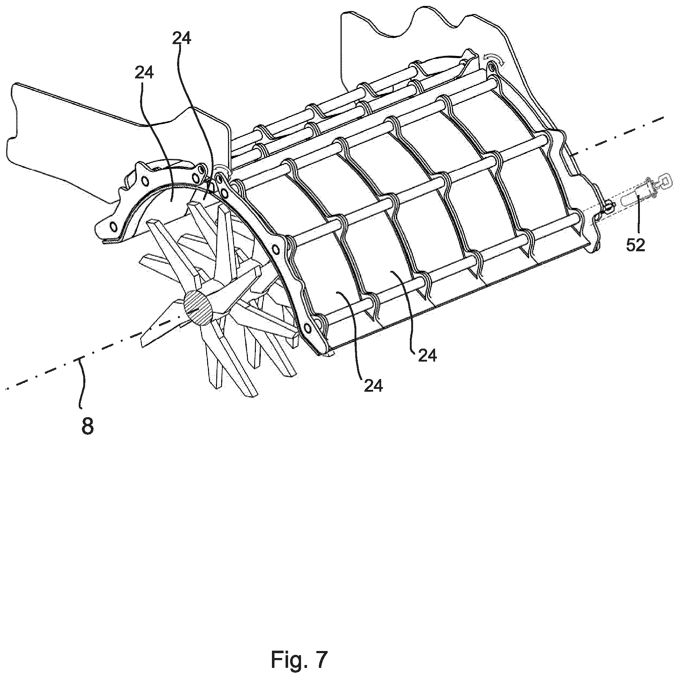

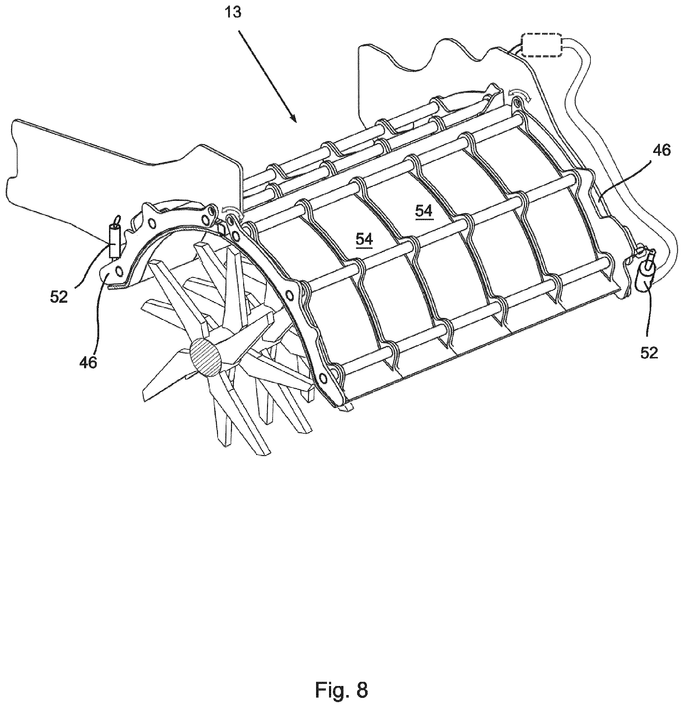

Eine landwirtschaftliche Arbeitsmaschine ist vorliegend eine als Bodenfräse ausgebildete Bodenbearbeitungsmaschine 2 (Fig. 1). Die Bodenbearbeitungsmaschine 2 weist eine mit einer Mehrzahl von Werkzeugen 4 versehene Welle 6 auf, deren Drehachse 8 (vergl. Fig. 5 und 7) sich im Betrieb angewinkelt zur Fahrtrichtung F erstreckt. Im Ausführungsbeispiel verläuft die Drehachse 8 parallel zum Untergrund 10 (Fig. 6). Die Bodenbearbeitungsmaschine 2 umfasst des Weiteren ein an einem Rahmen 12 gehaltenes Gehäuse 13 (Fig. 2 und 8), welches über einen Umfangswinkel von nahezu 180° (Fig. 5) um die Welle 6 und deren Drehachse 8 herum angeordnet ist.

Das Gehäuse ist bezüglich einer Lotrechten 15, die durch die Drehachse 8 verläuft, in einem Schwenkwinkel von nahezu +/- 90° oberhalb der Drehachse und somit oberhalb der Welle angeordnet (Fig. 5). Zwischen Welle 6 und Innenwandteilen 18 der vorderen und hinteren Gehäuseteile 20, 22 des Gehäuses ist ein Kanal 16 ausgebildet, in dem und durch den der Boden bzw. die Erde aufbereitet gefördert wird.

Der vordere Gehäuseteil 20 und der hintere Gehäuseteil 22 sind erfindungsgemäß beweglich angeordnet und können um Schwenkachsen 32, die oberhalb der Welle 6 angeordnet sind, verschwenken (Fig. 6) und somit in unterschiedliche Betriebspositionen überführt werden. Diese sind einstell- und somit von einer Bedienperson vorgebbar.

Die Gehäuseteile 20, 22 sind über Längsträger 30 schwenkbar in Seitenblechen 14 und an Mittelblechen 17 gelagert. Die Gehäuseteile 20, 22 erstrecken sich insbesondere komplett über die Länge der Welle 6 und können die beiden in der Fig. 6 übereinander dargestellten Betriebspositionen sowie zusätzlich nicht dargestellte Zwischenpositionen einnehmen. Entsprechend sind in Fig. 6 jeweils zwei Innenwandteile 18 des vorderen und hinteren Gehäuseteils dargestellt. In den beiden dargestellten Betriebspositionen unterscheiden sich die beiden fest einstellbaren Betriebspositionen des vorderen Gehäuseteils 20 dadurch, dass in einer aufgeschwenkten, oberen Betriebsposition eine Vorderkante 34 weiter nach vorne und höher bezüglich des Untergrunds 10 ist, als die Vorderkante 34 in der eingeschwenkten, unteren Position. Analoges gilt für die hintere Kante 36 des hinteren Gehäuseteils 22. Die Beweglichkeit der vorderen und hinteren Gehäuseteile 20, 22 wird durch Doppelpfeile 38 im Bereich von Schwenklagern 40 indiziert.

Allgemein wird das Gehäuse der Bodenbearbeitungsmaschine 2 durch einen vorderen und hinteren Gehäuseteil 20 und 22 ausgebildet, wobei die Innenwand des Gehäuses durch die beiden (vorderen und hinteren) Innenwandteile 18 ausgebildet wird.

Die Innenwandteile 18 ihrerseits und somit auch die Innenwand des Gehäuses werden jeweils durch mehrere in Fahrtrichtung betrachtet nebeneinander angeordnete, identische Segmente 24 ausgebildet. Die Segmente 24 sind flächig, insbesondere streifenförmig, ausgebildet und parallel zur Fahrtrichtung betrachtet länger als quer. Hiermit wird der Tatsache Rechnung getragen, dass die maßgebliche Bewegung der Erde und somit der Verschleiß ebenfalls in Fahrtrichtung und in Umfangsrichtung um die Welle 6 herum erfolgt. Besonders verschleißanfällige Bereiche, je nach Werkzeugkonfiguration, können somit auf einfache Weise ersetzt werden, ohne dass die komplette Gehäusewand bzw. Innenwand des Gehäuses 13 ersetzt werden muss. Sowohl der vordere als auch der hintere Gehäuseteil 20, 22 sind aus den Segmenten 24 mit aufgebaut.

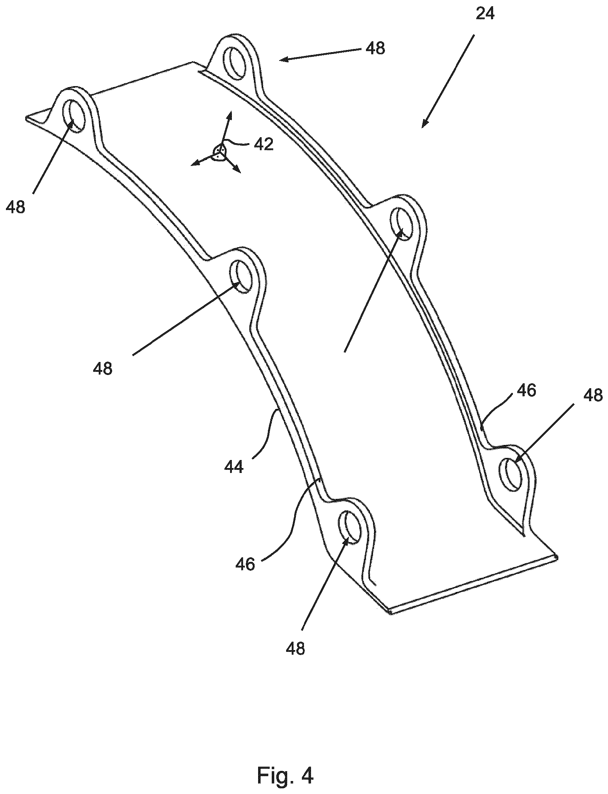

Die Segmente 24 sind vorliegend vollständig durch ein elastomeres Material einer Shorehärte A zwischen 75 und 95 ausgebildet und können entsprechend schwingen bzw. vibrieren, insbesondere in einer Richtung parallel zur Lotrechten 42 (Fig. 4).

Die Segmente 24 weisen entlang ihrer Längskanten 44 verlaufene Längsstege 46 auf, die die Segmente 24 aussteifen. Gleichzeitig bilden die Längsstege 46 durch verdickte, erweiterte Bereiche Aufnahmen 48 aus, über die die Segmente 24 an den Querträgern 28 befestigt sind. Diese wiederum sind in den Längsträgern 30 gelagert, wobei ein oder mehrere Querträger über nicht dargestellte Langlöcher relativ beweglich gegenüber den Längsträgern 30 gelagert sein können. Quer- und Längsträger 28, 30 bilden jeweils Gehäuseteilerahmen aus, der schwenkbeweglich gegenüber dem Rahmen 12 ist.

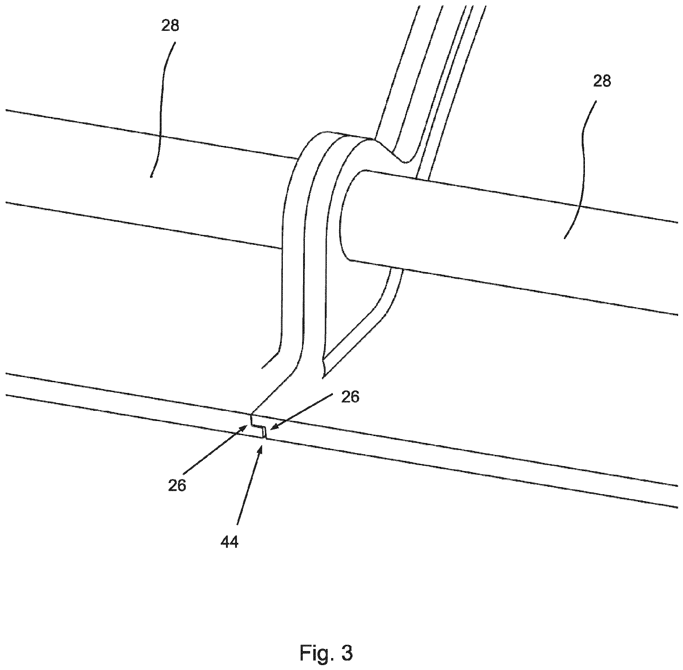

Zur besseren und besser dichtenden Anlage der Segmente aneinander weisen diese entlang der Längskanten 44 Rücksprünge bzw. Schultern 26 auf, die auf den einander zugewandten Seiten komplementäre Formen besitzen (Fig. 3) und über die in der Anlage aneinander eine Dichtung erzeugt wird, aufgrund derer die Erde verbessert im Kanal 16 gehalten wird. Nebeneinander angeordnete Segmente 24 sind somit teilweise überlappend angeordnet.

Die Aufnahmen 48 stellen Befestigungsmittel auf, die zur Befestigung an dem Gehäuserahmen oder auch zur Befestigung aneinander dienen können. Entsprechend der verschiedenen Betriebszustände der hinteren und vorderen Gehäuseteile 20, 22 weisen auch die Segmente 24 entsprechend unterschiedliche Betriebszustände mit unterschiedlichen Abständen der Innenwand von der Drehachse 8 auf.

Zusätzlich ist die Bodenbearbeitungsmaschine 2 mit einer nur gestrichelt dargestellten und endseitig der Welle 6 angeordneten Wellenstellvorrichtung 50 versehen, über die die Welle in die in der Fig. 6 gestrichelt dargestellten Position überführbar und dort festlegbar ist. Über die Wellenstellvorrichtung 50 ist diese in der Höhe verstellbar am Rahmen 12 der Bodenbearbeitungsmaschine 2 angeordnet.

Sowohl der vordere als auch der hintere Gehäuseteil 20, 22 sind über ein vorderes sowie ein hinteres Stellmittel 52 verstellbar, nämlich um die jeweilige Schwenkachse 32 verstellbar, die beispielsweise in der Fig. 5 jeweils senkrecht zur Figurenebene verläuft. Beispielsweise handelt es sich bei dem Stellmittel 52 um einen Hydraulikzylinder, der rahmenseitig festgelegt ist und an einem seitlichen Längsträger 46 befestigt ist (Fig. 8) oder um eine einfache mechanische Festlegung der Gehäuseteile 20, 22 am Rahmen 12 mittels eines in seiner Länge veränderbaren Schraubmittels (Fig. 7).

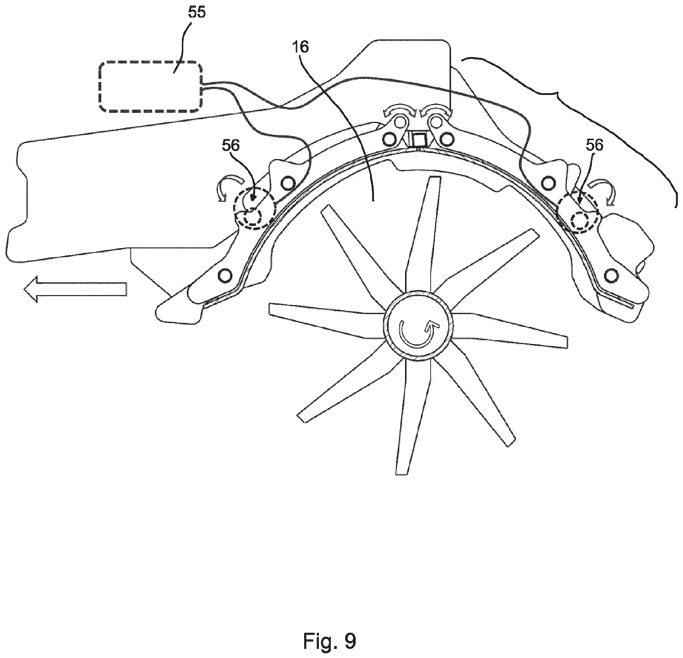

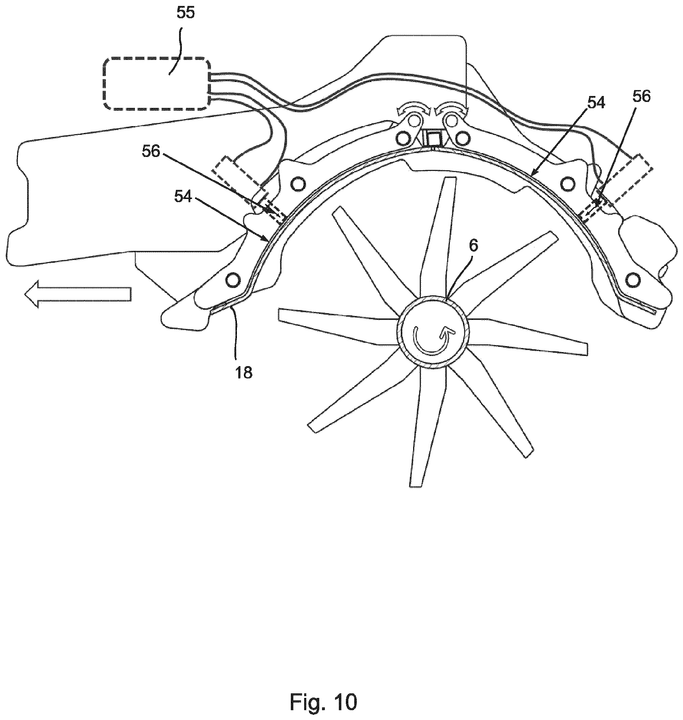

Von rahmenseitig angeordneten Vibrationserzeugern werden über deren Vibrationsmittel 56 Vibrationen auf die äußeren Oberflächen 54 übertragen. Hierdurch werden insbesondere geschwindigkeitsabhängig über eine entsprechende Steuervorrichtung 55, die Teil der Maschinensteuerung der Arbeitsmaschine sein kann, die Drehzahlen von Vibrationsmitteln 56 in Form von exzentrisch angeordneten Drehscheiben bzw. die Frequenzen von Vibrationsmitteln 56 in Form von senkrecht zur Oberfläche 54 längsbeweglichen Stempeln vorgegeben (Fig. 9 und 10).

## Patentansprüche

1. Landwirtschaftliche Arbeitsmaschine, insbesondere in Form einer vorzugsweise als Bodenfräse ausgebildeten Bodenbearbeitungsmaschine (2), umfassend eine mit wenigstens einem Werkzeug (4) versehene Welle (6), deren Drehachse (8) sich im Betrieb angewinkelt zur Fahrtrichtung (F) und zumindest im Wesentlichen parallel zum Untergrund (10) erstreckt, und umfassend ein an einem Rahmen (12) der Arbeitsmaschine angeordnetes Gehäuse (13), welches zumindest abschnittsweise oberhalb der Welle (6) angeordnet ist und eine einen Kanal (16) zwischen Welle (6) und Gehäuse (13) begrenzende Innenwand aufweist, **dadurch gekennzeichnet, dass** das Gehäuse bezüglich der Fahrtrichtung einen vorderen und einen hinteren, beweglichen Gehäuseteil (20,22) mit jeweiligen Innenwandteilen (18) aufweist, die sich jeweils entlang der Welle (6) erstrecken und die jeweils zumindest zwei einstellbare, unterschiedliche Betriebspositionen aufweisen, in denen die jeweiligen Innenwandteile (18) der Gehäuseteile (20,22) unterschiedlich zur Welle (6) positioniert sind.

2. Arbeitsmaschine nach Anspruch 1, **dadurch gekennzeichnet, dass** die Gehäuseteile (20, 22) um zumindest eine und insbesondere um jeweils eine angewinkelt zur Fahrtrichtung (F) verlaufende und insbesondere parallel zur Drehachse (8) der Welle (6) verlaufende Schwenkachse (32) relativ zu dem Rahmen (12) verschwenkbar sind.

3. Arbeitsmaschine nach Anspruch 2, **dadurch gekennzeichnet, dass** jeweilige Schwenklager (40) an den zueinander hin gewandten Enden der Gehäuseteile (20, 22) und insbesondere oberhalb der den Kanal (16) begrenzenden Innenwandteile (18) ausgebildet sind.

4. Arbeitsmaschine nach einem der vorherigen Ansprüche, **dadurch gekennzeichnet, dass** zur Versteifung zumindest eines der Gehäuseteile (20, 22) wenigstens ein Querträger (28) und/oder wenigstens ein Längsträger (30) vorgesehen ist.

5. Arbeitsmaschine nach einem der vorherigen Ansprüche, **dadurch gekennzeichnet, dass** die Innenwandteile (18) aus einem elastomeren Material zumindest mit ausgebildet ist.

6. Arbeitsmaschine nach einem der vorherigen Ansprüche unter Einschluss von Anspruch 4 und 5, **dadurch gekennzeichnet, dass** Längs- und Querträger (28,30) eines jeweiligen Gehäuseteils (20,22) einen Gehäuseteilerahmen ausbildend aneinander befestigt sind, insbesondere wobei zumindest einer der Längsträger (30) relativbeweglich zu zumindest einem der Querträger (28) und/oder zumindest ein Innenwandteil (18) relativbeweglich zu dem Gehäuseteilrahmen angeordnet ist.

7. Arbeitsmaschine nach einem der vorherigen Ansprüche, **dadurch gekennzeichnet, dass** zumindest einer der Innenwandteile (18) in zumindest zwei Betriebszuständen unterschiedliche Krümmungsradien aufweist.

8. Arbeitsmaschine nach einem der vorherigen Ansprüche, **dadurch gekennzeichnet, dass** dem vorderen Gehäuseteil (20) wenigstens ein vorderes Stellmittel (52) zugeordnet ist, über dass eine Vorderkante (34) des vorderen Gehäuseteils (20) in der Höhe und/oder entlang der Fahrtrichtung (F) verstellbar ist.

9. Arbeitsmaschine nach einem der vorherigen Ansprüche, **dadurch gekennzeichnet, dass** dem hinteren Gehäuseteil (22) wenigstens ein hinteres Stellmittel (52) zugeordnet ist, über dass die hintere Kante (36) des hinteren Gehäuseteils (22) in der Höhe und/oder entlang der Fahrtrichtung (F) verstellbar ist.

10. Arbeitsmaschine nach einem der vorherigen Ansprüche, **dadurch gekennzeichnet, dass** die Welle (6) über eine Wellenstellvorrichtung (50) in der Höhe verstellbar am Rahmen (12) der Arbeitsmaschine angeordnet ist.

11. Arbeitsmaschine nach einem der vorherigen Ansprüche, **gekennzeichnet durch** zumindest einen Vibrationserzeuger, der mit zumindest einem der Gehäuseteile (20, 22) zur Anregung einer Vibration desselben verbunden ist.

12. Arbeitsmaschine nach Anspruch 11, **dadurch gekennzeichnet, dass** der Vibrationserzeuger quer zur Fahrtrichtung (F) betrachtet und bezüglich der Fahrtrichtung zwischen einem vorderen und einem hinteren Ende eines der Gehäuseteile (20, 22) angeordnet ist.

13. Arbeitsmaschine nach Anspruch 11, **dadurch gekennzeichnet, dass** der Vibrationserzeuger quer zur Fahrtrichtung betrachtet an einem bezüglich der Fahrtrichtung (F) vorderen oder hinteren Ende eines der Gehäuseteile (20, 22) angeordnet ist.

14. Arbeitsmaschine nach einem der Ansprüche 11 bis 13, **dadurch gekennzeichnet, dass** der Vibrationserzeuger ein Vibrationsmittel (56) umfasst, das an dem Gehäuseteil (20, 22) anliegt oder mit diesem verbunden ist und wobei das Vibrationsmittel (56) zur Ausübung einer Kraft auf den Gehäuseteil (20, 22) insbesondere in Richtung quer zur flächigen Erstreckung des Gehäuseteils (20, 22) ausgebildet ist.

15. Arbeitsmaschine nach Anspruch 14, **dadurch gekennzeichnet, dass** das insbesondere in Form einer Drehscheibe ausgebildete Vibrationsmittel (56) rotierend antreibbar und/oder längsbeweglich in Richtung quer zur flächigen Erstreckung des Gehäuseteils (22) ausgebildet ist.
